# EUROPEAN PATENT APPLICATION

(11) **EP 3 722 602 A1**
(43) Date of publication of application: **14.10.2020**
(21) Application number: 19000545.4
(22) Date of filing: 05.12.2019
(51) Int. Cl.: F03G 7/10

(54) **GRAVITATIONAL GENERATOR**

(30) Priority: 10.04.2019 ES 201930323
(71) Applicant: Pedro San José Solla, 28025 Madrid (ES)
(72) Inventor: Pedro San José Solla, 28025 Madrid (ES)
(74) Representative: Botella Reyna, Juan

(57) **Abstract**

The invention consists of a device in the form of a large wheel (1) in which are incorporated a set of gondolas (5) each of identical configuration and weight, such that the wheel moves by means of a small electric motor while the gondolas, swinging with respect to the wheel, tend to turn towards a vertical position due to the effect of the gravitational field, which causes a relative rotational motion which, via a transmission, is used to actuate an alternator (12) and thus generate electrical energy. Given that the structure is as perfectly balanced as possible, and that the friction in the axes is as minimised as possible, the energy needed to move the machine, once it has reached its constant operating velocity, will be much less than the energy generated by the effect of gravity, thus providing a source of energy which is clean, independent, and easy to install.

## Description

### SECTOR OF THE ART

The present invention refers to a generator of electrical energy whose operation is essentially based on the use of the force of gravity, i.e. of the gravitational field of the Earth, to produce electrical energy.

The object of the invention is to provide a simple, economical, scalable device, easy to install, with few limitations on its location.

The invention is preferably situated in the sector of electrical self-supply, ideal for places that do not have access to an electrical distribution network, although it can well be used in other areas.

### BACKGROUND OF THE INVENTION

At present, there are several factors that condition the market of electrical generation, in both its present form and its future evolution.
- The growing demand for electric energy by society, especially in the so-called emerging economies.
- The problem of climate change, which has required a strong development of alternative and renewable energies, among which are notably the wind and solar photovoltaic energies, which are limited by specific climate conditions, such as the lack of sunlight or wind.
- The sources of energy on which we still depend to a large degree, such as petroleum, gas, and coal, depend on reserves which tend to depletion, to which we should add that they generate a high degree of contamination and contribute to global warming. As for nuclear fission energy, currently in use, even though it does not produce greenhouse gases, it does yield nuclear waste which is difficult to manage and uses a raw material whose reserves are also limited.

The use of the potential energy of the Earth's gravitational field to produce electrical energy is also very well-known and widely used, with the most common application in hydroelectric power stations.

However, this type of installation has a series of inherent limitations and problems, among which the following are the most important:
- Limitations of the location, due to the need for riverbeds with an associated topography that permits the generation of a suitable fall of water.
- The high cost of the installation
- Environmental impact

Although there are other methods known, apart from those used in hydroelectric power stations, which try to use the effect of the Earth's gravitational field, these methods have not had success in practice, nor are they commercialised, because they are either too complex, and hence expensive to implement, or because they are not sufficiently productive to make them economically viable, or simply because they don't work.

### EXPLANATION OF THE INVENTION

The recommended gravitational generator resolves in an entirely satisfactory way the problems indicated above, on the base of a simple but effective solution, which generates clean energy, is easy to install, and is scalable according to the specific needs of each case, that is not influenced by climatic conditions so that it can work without interruption for 24 hours a day, 365 days per year, and that can be installed almost anywhere, with a fabrication cost less than other systems for generating electricity.

To do so, the generator in this invention produces electrical energy by extracting, in a simple and novel way, the potential energy of the Earth's gravitational field to transform it into electrical energy, such that, although this will make a theoretical impact by supposedly slowing down the Earth's rotation, the order of magnitude on which the mechanism of the invention works compared to the gravitational field of the Earth is so tiny that this will in no way imply an appreciable effect.

This does not signify a perpetual motion of the first kind which would violate the laws of thermodynamics, but rather that there is a "consumption" of potential energy that is transformed into electrical energy, as will be shown below.

More concretely, the generator in the invention comprises a structure similar to a perfectly balanced large wheel, to whose central axis is connected a small motor with reduction gears which makes the wheel rotate. The wheel has a set of diametral arms, at least two, which rotate together with the central axis of the wheel, and at whose ends are attached axes from which hang gondolas, both with the same weight, so that when the wheel turns the gondolas tend to turn due to gravitational action, both when ascending and descending, which causes a constant rotational motion about the axes which connect the gondolas to the arms or structure of the wheel.

Inside each gondola there is an alternator whose rotational axis is associated with a multiplier whose output axis is connected by a transmission to the rotational axis of the gondola with respect to the arm of the wheel so that, through the internal electronic control of the gondola, clean and inexhaustible electrical energy can be obtained, stabilised at previously established levels.

It is clear that the greater the number of diametral arms with their corresponding gondolas attached to their ends, the greater will be the power delivered by the generator.

It should be pointed out that, when starting up the generator, it will be necessary to overcome the inertia of the whole device, which implies a brief additional consumption of electricity which consumption will be greatly reduced when the machine is rotating uniformly and constantly, because then it will be necessary only to overcome the friction of the rotational axis of the wheel, since whatever bearings are used will clearly offer minimum friction.

A small part of the energy produced will be used to feed the motor which turns the wheel, because it is necessary to overcome the friction generated by the various axes of the machine so that the generator could use an auxiliary battery when starting up, at which point its electrical consumption is at a maximum. This battery would be recharged by the generator itself once it reaches its operating rate of revolution, and it would then be fully autonomous.

### BRIEF DESCRIPTION OF THE DIAGRAMS

To complement the description to be provided below, and to help with a better understanding of the characteristics of the invention, according to a preferred practical embodiment of this invention, a set of plans is included as an integral part of the description, of an illustrative but not a limiting nature, as follows:
Figure 1. Shows a schematic view of the operational base of a gravitational generator according to the object of the present invention.
Figure 2. Shows a perspective view of one practical embodiment of the generator.
Figure 3. Shows, finally, a perspective and partial cross-section view of one of the gondolas which form a part of the generator of the invention.

### PREFERRED EMBODIMENT OF THE INVENTION

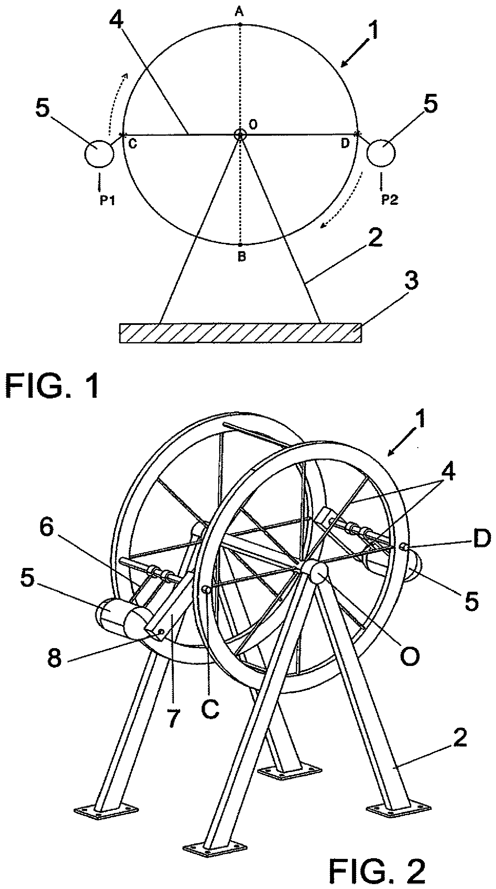

Viewing the three indicated figures, and especially Figure 1, it can be seen how the generator of the invention is constituted of a structure similar to a large wheel (1), which incorporates a supporting structure (2) attachable to the ground (3), which includes a rotational axis (O) and incorporating at least one diametral arm (4) fixed to the rotational axis (O), and which is activated by a small motor, or a motor-reducer.

At each end of the diametral arm (4) of the wheel is attached a gondola (5) whose weights (P1) and (P2) are identical, so that when this perfectly balanced wheel is rotated the energy provided by each body moving from point (A) to point (B) is used by the opposing body to move from point (B) to point (A), so that the whole set of parts can move easiiy with a small use of energy needed to overcome the friction produced in the rotational axis (O).

The action of gravity on the weights (P1) and (P2) of the gondolas (5) causes them to start to turn about the axes (C) and (D) respectively, that is to say that they fall under gravity during their circular trajectories with respect to these axes, in what we can be termed metaphorically as a "bottomless pit".

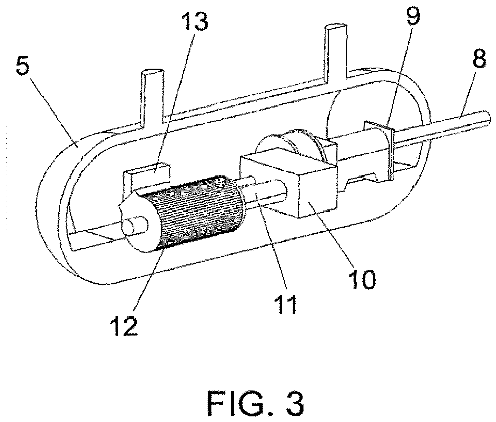

As can be seen in Figure 2 the gondolas (5) are attached to the axes (C) and (D) via the articulated arms (6) and a transmission (7) which transmits this movement of constant rotation which is generated about the axes (C) and (D) to the respective input axes (8) so that, as shown in Figure 3, the input axes (8) are associated via a coupling system of axes (9) and a revolution multiplier (10) to axis (11) of an alternator (12) which, via the corresponding electronic control (13), produces an energy which is stabilised and adapted to levels of voltage for its use.

As has been described above, the generator uses feedback energy to be fully autonomous, and in this case it could be assisted by one or more electrical batteries to supply the motor associated with the axis (O) when starting its operation and in transition to the constant rotational velocity of operation, which batteries would be recharged by using a small fraction of the energy generated by the machine itself.

As is evident, the greater the number of pairs of gondolas (5) associated with the ends of the corresponding diametral arms (4), the larger will be the output of the machine; these gondolas must be distributed at equal angular intervals.
The only remaining point is that the wheel could incorporate a flywheel, to make its rotation more stable and balanced while it is operating, without this affecting the invention in any essential way.

## Claims

1. ^{st}.- Gravitational generator, **characterised in that** it is constituted by a structure similar to a large wheel (1) which includes a support structure (2) and a rotational axis (O), and on which there is installed at least one diametral arm (4) fixed to the rotational axis (O) and which is set in motion by a small electric motor, or motor-reducer, with the characteristic that at each end of the diametral arm (4) of the wheel there is an axis (C and D) on which hang the arms (6) of a gondola (5) of identical configuration and weight, swinging under their own weight from the rotational axes (C-D), and with the detail that in the interior of each gondola (5) there is an input axis (8), which is associated at one of its ends with the rotational axis (C-D) by means of a transmission (7), while at the other end it is associated by a coupling system to axes (9), to a revolution multiplier (10), to a high revolution axis (11) and to an alternator (12) generating electrical energy, associated with its corresponding electronic control (13) to stabilise and distribute the energy generated.

2. ^{nd}.- Gravitational generator, according to Claim 1, **characterised in that** the electric motor associated with the rotational axis (O) is driven by feedback energy generated in the gondolas.

3. ^{rd}.- Gravitational generator, according to Claim 1, **characterised in that** it includes an electric battery to start the electric motor associated with the rotational axis (O)

4. ^{th}.- Gravitational generator, according to Claim 1, **characterised in that** the wheel includes a flywheel.

5. ^{th}.- Gravitational generator, according to Claim 1, **characterised in that** the structure of the wheel (1) permits the incorporation of two, four, or any even number of gondolas distributed at equal angular intervals.
